# EUROPEAN PATENT SPECIFICATION

(11) **EP 3 032 075 B1**
(45) Date of publication and mention of the grant of the patent: **20.09.2017**
(21) Application number: 15199666.7
(22) Date of filing: 11.12.2015
(51) Int. Cl.: F02N 11/04, F16H 47/04, F02C 7/32, F02C 7/36, F02C 7/275, F16H 61/47

(54) **INTEGRATED APU GENERATOR CONSTANT SPEED DRIVE**
INTEGRIERTER KONSTANTDREHZAHLANTRIEB EINES APU-GENERATORS
COMMANDE À VITESSE CONSTANTE AVEC GÉNÉRATEUR À APU INTÉGRÉ

(30) Priority: 12.12.2014 US 201414568948
(43) Date of publication of application: 15.06.2016
(73) Proprietor: Hamilton Sundstrand Corporation, Charlotte, NC 28217 (US)
(72) Inventor: LEMMERS JR., Glenn C., Loves Park, IL Illinois 61111 (US); WELCH, Timothy R., Roscoe, IL Illinois 61073 (US)
(74) Representative: Bridge, Kerry Ann

(56) References cited:
- EP-A2- 2 789 875
- US-A- 5 028 803
- US-A1- 2011 314 963
- US-B1- 6 527 660

## Description

### FIELD

The present disclosure relates to the field of electrical power generation. More particularly, the present disclosure relates to an auxiliary power unit generator constant speed drive system in which an auxiliary power unit operating at varying speeds drives a generator at a constant speed.

### BACKGROUND

Airplanes have utilized various auxiliary power units ("APUs") in combination with generators to provide electrical power. However, existing APU-generator systems encounter operational challenges. For example, the frequency of the alternating current produced by the generator depends on the rotational speed of the generator. Because the APU provides the rotational impetus driving the generator, the APU is also operated at a constant rotational speed to maintain a constant frequency alternating current. The APU rotational speed is controlled by the APU throttle setting (which varies with altitude). Thus, it remains preferable to keep the APU at a specific, generally high, throttle setting, regardless of whether there are times of decreased electrical load (or increased APU efficiency) or times of increased electrical load (or decreased APU efficiency), in order to maintain constant rotational speed. However, maintaining a high throttle setting during times of reduced electrical load or increased APU efficiency expends large amounts of fuel.

EP2789875A2 describes the control of shifting transmission for constant and variable frequency systems. US5028803A describes an integrated drive generator ("IDG") system for use onboard an aircraft wherein a prime mover (e.g. an aircraft engine) is used as a power source for an electrical generating system for the aircraft. US6527660B1 describes a method and apparatus to transfer torque at a nominally constant speed to a dynamoelectric machine from a variable speed engine.

### SUMMARY OF THE INVENTION

In accordance with various aspects of the present invention, an integrated APU-generator constant speed drive system according to claim 1 is disclosed. The system may include an auxiliary power unit having an engine having a variable frequency rotational output including a shaft turning at a non-constant angular velocity, and a gearbox connected to the variable frequency rotational output and having a constant speed gearbox output including a shaft turning at a constant angular velocity. The gearbox may transfer energy from the variable frequency rotational output to the constant speed gearbox output.

A method of controlling a speed of a constant speed gearbox according to claim 8 is disclosed. The method may include rotating, by an engine of an auxiliary power unit, a variable frequency rotational output, at a non-constant angular velocity, driving, by the variable frequency rotational output, a differential, and rotating by the differential, a constant speed gearbox output, and a hydraulic output controller control shaft. The method may also include sensing the speed of the constant speed gearbox output by a speed sensor, providing speed control instructions by the speed sensor to a servomotor responsive to the speed control instructions, and operating a swash plate in response to the servomotor. The swash plate may control the speed of the hydraulic output controller control shaft, and the differential may regulate the speed of the constant speed gearbox output to be a constant angular velocity in response to the swash plate controlling the speed of the hydraulic output controller control shaft.

### BRIEF DESCRIPTION OF THE DRAWINGS

A more complete understanding of the present disclosure may be derived by referring to the detailed description and claims when considered in connection with the Figures, where like reference numbers refer to similar elements throughout the Figures, and:
FIG. 1 depicts a block diagram of various functional units of an integrated APU generator constant speed drive system, in accordance with various embodiments;
FIG. 2 depicts a block diagram of various functional units of a gearbox of an integrated APU generator constant speed drive system, in accordance with various embodiments;
FIGS. 3A-B depict views of a gearbox of an integrated APU generator constant speed drive system in accordance with various embodiments;
FIG. 3C depicts a view of various aspects of a generator and hydraulic output speed controller of a gearbox of an integrated APU generator constant speed drive system in accordance with various embodiments; and
FIG. 4 depicts a method of controlling a speed of a constant speed gearbox in accordance with various embodiments.

### DETAILED DESCRIPTION

The following description is of various exemplary embodiments only, and is not intended to limit the scope, applicability or configuration of the present disclosure in any way. Rather, the following description is intended to provide a convenient illustration for implementing various embodiments including the best mode. As will become apparent, various changes may be made in the function and arrangement of the elements described in these embodiments without departing from the scope of the appended claims. Furthermore, any reference to singular includes plural embodiments, and any reference to more than one component or step may include a singular embodiment or step. Surface shading lines may be used throughout the figures to denote different parts but not necessarily to denote the same or different materials.

For the sake of brevity, conventional techniques for manufacturing and construction may not be described in detail herein. Furthermore, the connecting lines shown in various figures contained herein are intended to represent exemplary functional relationships and/or physical couplings between various elements. It should be noted that many alternative or additional functional relationships or physical connections may be present in a practical method of construction. Also, any reference to attached, fixed, connected or the like may include permanent, removable, temporary, partial, full and/or any other possible attachment option. Additionally, any reference to without contact (or similar phrases) may also include reduced contact or minimal contact.

Airplanes typically utilized various auxiliary power units ("APUs") in combination with generators to provide electrical power. The electrical power is generally desired to be provided at a constant frequency, for example, 400 Hz or 60 Hz, or another desired frequency. The electrical power is supplied to various aircraft systems, such as control systems, engine systems, navigation systems, communication systems, cabin entertainment systems, and other systems. Depending on which system is using electrical power, and depending on the mode of flight and other operating factors, the electrical load on the generator may vary. During periods of high electrical load, the generator places a high mechanical load on the auxiliary power unit. Similarly, during periods of low electrical load, the generator places a low mechanical load on the auxiliary power unit. Stated differently, the torque associated with maintaining the generator rotating at a constant speed varies in proportion to the electrical load on the generator. As a result, during period of high electrical load, it is desired to run the auxiliary power unit at a higher throttle setting than periods of low electrical load. However, if the throttle setting of the auxiliary power unit is varied, in addition to the output torque of the auxiliary power unit being varied, the rotational speed of the auxiliary power unit also varies. This presents a challenge because variations in the rotational speed can also cause undesired variations in the output frequency of the electrical power generated.

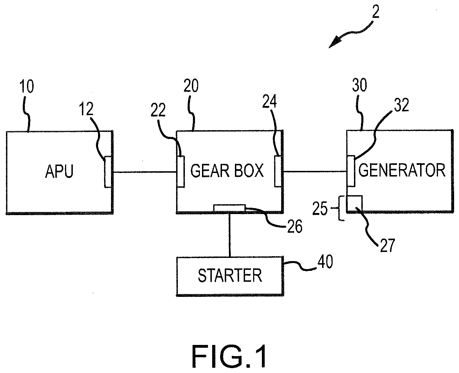

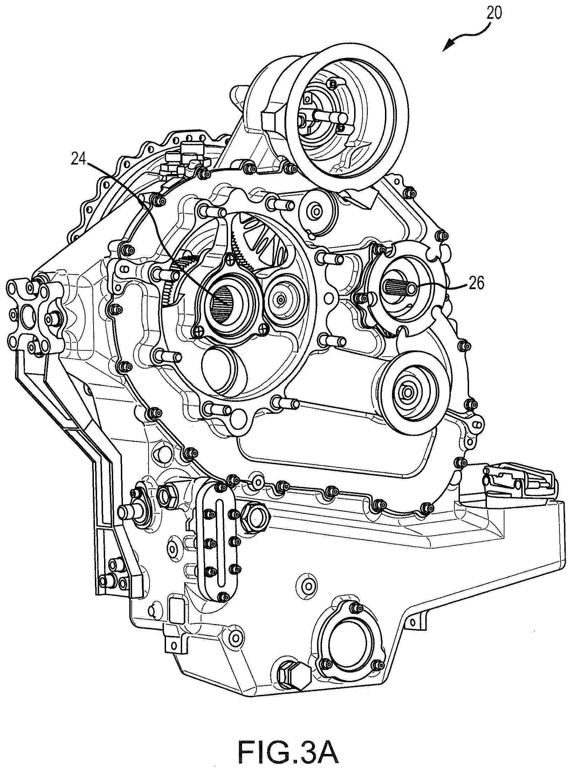

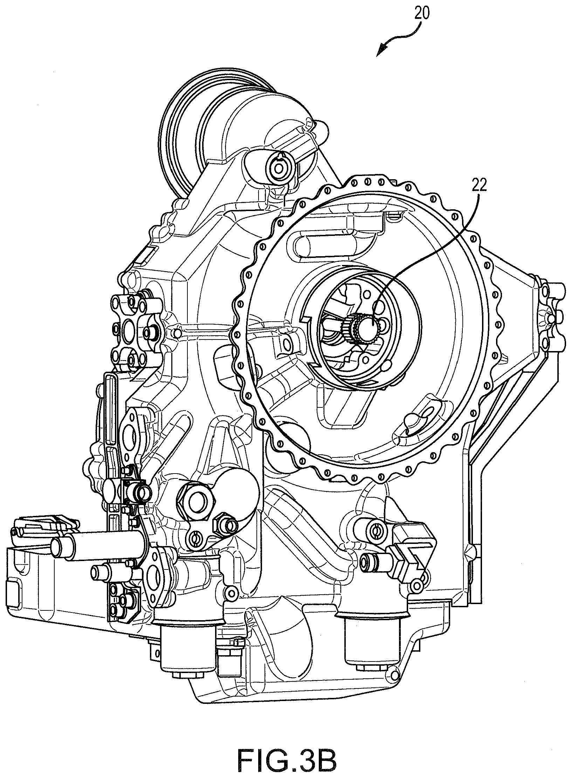

In various embodiments, an integrated APU generator constant speed drive system 2 is provided. With reference to FIGS. 1, 3A, and 3B, an integrated APU generator constant speed drive system 2 comprises an auxiliary power unit 10, a gearbox 20. The system 2 may also comprise a generator 30, and a starter 40. The auxiliary power unit 10 has a variable frequency rotational output 12 that comprises a mechanically rotating shaft and/or shaft receptacle that rotates at varying speeds, conveying rotational energy to a gearbox 20. The gearbox 20 has a variable speed gearbox input 22 that comprises a mechanically rotating shaft receptacle and/or shaft that mechanically interconnects with the variable frequency rotational output 12 of the auxiliary power unit 10. In this manner, the gearbox 20 receives kinetic energy from the auxiliary power unit 10. The gearbox 20 further has a constant speed gearbox output 24 that comprises a mechanically rotating shaft and/or shaft receptacle that rotates at a constant speed, conveying kinetic energy from the gearbox 20 to a generator 30. The generator 30 has a generator input 32 that comprises a mechanically rotating shaft receptacle and/or shaft that mechanically interconnects with the constant speed gearbox output 24 of the gearbox 20. In this manner, kinetic energy is received from the auxiliary power unit 10 by the gearbox 20 and delivered by the gearbox 20 to the generator 30.

An integrated APU generator constant speed drive system 2 may further comprise a starter 40. The gearbox 20 may have a starter rotational input 26 that comprises a shaft and/or shaft receptacle that interconnects to a starter 40. The starter 40 may be selectably engaged to impart rotational kinetic energy to the starter rotational input 26. In response, the gearbox 20 may convey this rotational kinetic energy to the auxiliary power unit 10 by driving the variable frequency rotational output 12 of the auxiliary power unit 10 as an input, causing the variable frequency rotational output 12 to rotate, such as to enable the auxiliary power unit 10 to be started.

Having discussed the general architecture of an integrated APU generator constant speed drive system 2, continuing attention is directed to FIG. 1 as various aspects of various components of the integrated APU generator constant speed drive system 2 are discussed.

The auxiliary power unit 10 ("APU") 10 may comprise any engine, motor, or kinetic energy delivering apparatus. For example, the auxiliary power unit 10 may comprise a gas turbine engine. The gas turbine engine may be powered by the same fuel as the aircraft main engines, for example a kerosene-type jet fuel such as Jet A, Jet A-1, JP-5, and/or JP-8. Alternatively, the fuel may be a wide-cut or naphtha-type jet fuel, such as Jet B and/or JP4. Furthermore, the fuel may be a synthetic fuel, such as Fischer-Tropsch Synthetic Paraffinic Kerosene (FT-SPK) fuel, or Bio-Derived Synthetic Paraffinic Kerosene (Bio-SPK), or may be any other suitable fuel. Alternatively, the auxiliary power unit 10 may comprise engine an internal combustion reciprocating engine, such as one based on Otto cycle, or Diesel cycle, or Miller cycle, or Atkinson cycle, or an internal combustion rotary engine (e.g., Wankel engine), or another internal combustion engine, or an external combustion continuous engine such as a gas turbine engine (based on the open Brayton cycle) powered by a different fuel than the aircraft engines, or any other heat engine. Furthermore, the auxiliary power unit 10 may comprise an internal combustion engine which is aspirated naturally or with forced induction (either turbo-charged or super-charged). The engine may have a turbocharger which may be a single or dual (twin) configuration using a centrifugal compressor directly coupled to either an axial inflow- or centrifugal inflow turbine, and whose operation may be further enhanced by structures such as: variable vane geometries, articulated waste gates, blow-off/pressure relief valves, and by methods such as intercooling, water spray injection, etc.

The generator 30 may comprise any aircraft electrical generator. For example, the generator 30 may provide alternating current for utilization by aircraft systems in response to a generator input 32, such as a rotating shaft, being spun. The generator 30 may comprise an induction generator, or a high-speed electric machine, or any electrical generator.

The starter 40 may comprise any engine starter. The specific architecture of the starter 40 may vary. For example, the starter 40 may comprise an electrical motor, or may comprise a hydraulic actuator, or may comprise a pneumatic actuator, or may comprise a mechanical, hydraulic, or pneumatic interconnection with an aircraft main engine, or may comprise any suitable kinetic energy imparting device adapted to start the auxiliary power unit 10.

The gearbox 20 may comprise a constant speed gearbox. For example, the gearbox 20 may receive kinetic energy from a rotating shaft that rotates at varying speeds (from the auxiliary power unit 10) and may deliver kinetic energy (to the generator 30) via a rotating shaft that rotates at a constant speed. The gearbox 20 may accomplish this by various arrangements of gears as discussed herein.

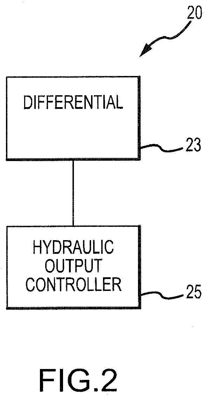

For example, with reference to FIG. 2, 3A and 3B, various aspects of the gearbox 20 are illustrated. The gearbox 20 may comprise a differential 23. The differential 23 may comprise an open differential. However, in further embodiments, the differential 23 may any desired differential style. The differential 23 may be disposed in mechanical communication with the variable speed gearbox input 22 and the constant speed gearbox output 24. The differential 23 may receive input kinetic energy from a rotating shaft, such as a variable frequency rotational output 12 (FIG. 1) of an APU 10 (FIG. 1) which may be connected to the variable speed gearbox input 22. The differential 23 may output kinetic energy from the gearbox 20 by the constant speed gearbox output 24 comprising a rotating shaft. The differential 23 may also output kinetic energy via a hydraulic output controller control shaft 51 comprising a rotating shaft. The differential 23 may cause the constant speed gearbox output 24 and the hydraulic output controller control shaft 51 to rotate. Moreover, the differential 23 may selectably transfer kinetic energy from the variable speed gearbox input 22 to the constant speed gearbox output 24 and the hydraulic output controller control shaft 51 according to standard mechanical principles understood by one having ordinary skill in the art.

The gearbox 20 may further comprise a hydraulic output speed controller 25 in mechanical communication with the hydraulic output controller control shaft 51. The hydraulic output speed controller 25 may interact with the differential 23 in order to maintain the constant speed gearbox output 24 at a constant speed. For example, the hydraulic output speed controller 25 may increase the load on the hydraulic output controller control shaft 51 (e.g., slow the rotation), thereby slowing the rotation of the hydraulic output controller control shaft 51 and causing the differential 23 to speed up the rotation of the constant speed gearbox output 24, or vis a versa. In this manner, the hydraulic output controller may be said to "control" the speed of the constant speed gearbox output 24.

With reference to FIGS. 1, 2, and 3C, the hydraulic output speed controller 25 may comprise any device whereby the differential 23 may be impelled to maintain the constant speed gearbox output 24 at a constant speed. For example, the hydraulic output speed controller 25 may comprise a speed sensor 27, a servomotor 28, and a swash plate 29. The speed sensor 27 may monitor the speed of the constant speed gearbox output 24 (and/or be contained within the generator assembly 30 as illustrated in FIG. 1). The speed sensor 27 may provide speed control instructions to a servomotor 28, which actuates a swash plate 29 in response to the speed control instructions. The swash plate 29 may exert load on the hydraulic output controller control shaft 51. In this manner, the speed of the constant speed gearbox output 24 may be controlled.

The speed sensor 27 may comprise a permanent magnet generator. In various embodiments, the speed sensor 27 may comprise a permanent magnet generator that is driven by the constant speed gearbox output 24. In further embodiments, the speed sensor 27 may comprise a permanent magnet generator disposed in generator 30 (FIG. 1). The speed sensor 27 may comprise a magnetic pickup speed sensor, or a hydraulic speed sensor, or any other mechanism by which generator 30 and/or constant speed gearbox output 24 speed (angular velocity) may be determined. The speed sensor 27 may provide control signals to the servomotor 28 in response to this determination.

The servomotor 28 may comprise an electrically operated rotary actuator. The servomotor 28 may comprise a dual nozzle flapper servo valve. In further embodiments, the servomotor 28 may comprise an electrically operated linear actuator. In still further embodiments, the servomotor 28 may comprise a hydraulic actuator, although any force imparting mechanism may be contemplated. In response to control signals from the speed sensor 27, the servomotor 28 may impel the swash plate 29 to move.

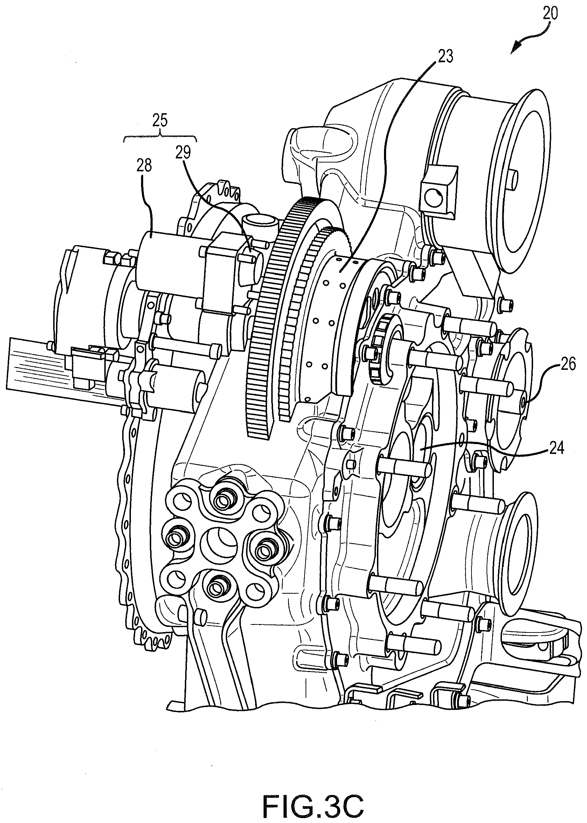

The swash plate 29 may comprise a mechanical ram, movable in response to the servo motor. The swash plate 29 may be in mechanical communication with the hydraulic output controller control shaft 51. In this manner, the swash plate 29 may exert a variable load on the hydraulic output controller control shaft 51 in response to the servomotor 28. For example, the swash plate 29 may exert a greater load on the hydraulic output controller control shaft 51, or may exert a lesser load on the hydraulic output controller control shaft 51, causing the hydraulic output controller control shaft 51 to spin more slowly when under a greater load than when under a lesser load. In an inverse response to the speed of the hydraulic output controller control shaft 51, the differential 23 may cause the constant speed gearbox output 24 to spin faster or slower. Because the speed sensor 27 (FIG. 1) of hydraulic output controller 25 (FIG. 1, 2) monitors the speed of the constant speed gearbox output 24 and directs the servomotor 28 (and thus swash plate 29) to control the speed of the hydraulic output controller control shaft 51 in response to the speed of the constant speed gearbox output 24, a feedback loop exists between the constant speed gearbox output 24 of the differential 23 and the hydraulic output controller control shaft 51 of the differential 23. The difference between the rotational speed of the slower of the outputs 24 and 51 and the nominal rotational speed of the outputs 24 and 51 when rotating at the same speed is added to the faster of the outputs 24 and 51. As such, the speed of the constant speed gearbox output 24 may be controlled in response to varying the speed of the hydraulic output controller control shaft 51 by the hydraulic output speed controller 25 (FIG. 2, 3C).

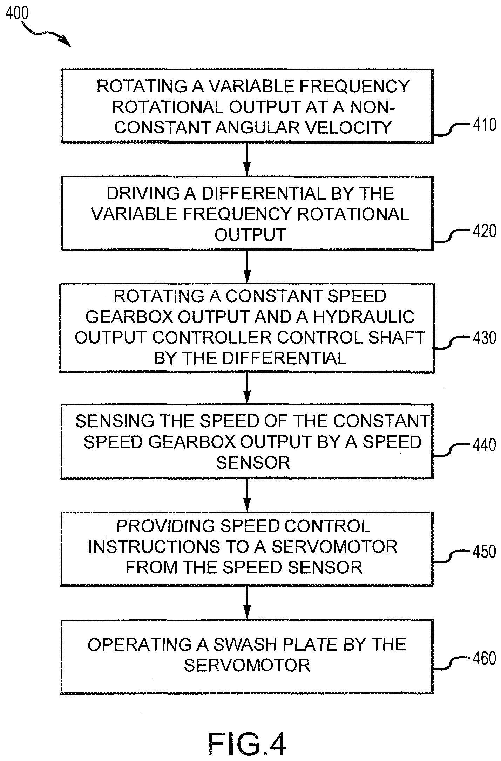

Having discussed various aspects of an integrated APU-generator constant speed drive system, attention is directed to FIG. 4, disclosing a method 400 of controlling a speed of a constant speed gearbox.

The method may include rotating, by an engine of an auxiliary power unit, a variable frequency rotational output, at a non-constant angular velocity (Step 410). The variable frequency rotational output may drive a differential (Step 420). The differential may rotate a constant speed gearbox output and a hydraulic output controller control shaft in response (Step 430). Moreover, a speed sensor may sense the angular velocity of the constant speed gearbox output (Step 440). The speed sensor may provide speed control instructions to a servomotor (Step 450), and the servomotor may operate a swash plate in response to the speed control instructions (Step 460). As such, the swash plate may control the angular velocity of the hydraulic output controller control shaft and the differential may regulate the angular velocity of the constant speed gearbox output to be a constant angular velocity in response to the swash plate controlling the angular velocity of the hydraulic output controller control shaft.

In various embodiments, the variable frequency rotational output is connected to the engine of the auxiliary power unit. In this manner, the variable frequency rotational output is rotated at the non-constant angular velocity, whereas the constant speed gearbox output is maintained at a constant angular velocity in response to the controlled variation in the angular velocity of the hydraulic output controller control shaft. Because the constant speed gearbox output drives a generator, the generator produces alternating current having a substantially constant frequency despite the non-constant angular velocity of the variable frequency rotational output of the auxiliary power unit.

Having discussed various aspects of an integrated APU generator constant speed drive system 2, an integrated APU generator constant speed drive system 2 may be made of many different materials or combinations of materials. For example, various components of the system may be made from metal. For example, various aspects of an integrated APU generator constant speed drive system 2 may comprise metal, such as titanium, aluminum, steel, or stainless steel, though it may alternatively comprise numerous other materials configured to provide support, such as, for example, composite, ceramic, plastics, polymers, alloys, glass, binder, epoxy, polyester, acrylic, or any material or combination of materials having desired material properties, such as heat tolerance, strength, stiffness, or weight. In various embodiments, various portions of integrated APU generator constant speed drive systems 2 as disclosed herein are made of different materials or combinations of materials, and/or may comprise coatings.

In various embodiments, integrated APU generator constant speed drive systems 2 may comprise multiple materials, or any material configuration suitable to enhance or reinforce the resiliency and/or support of the system when subjected to wear in an aircraft operating environment or to satisfy other desired electromagnetic, chemical, physical, or material properties, for example weight, heat generation, efficiency, electrical output, strength, or heat tolerance.

While the systems described herein have been described in the context of aircraft applications; however, one will appreciate in light of the present disclosure, that the systems described herein may be used in various other applications, for example, different vehicles, such as cars, trucks, busses, trains, boats, and submersible vehicles, space vehicles including manned and unmanned orbital and sub-orbital vehicles, or any other vehicle or device, or in connection with industrial processes, or propulsion systems, or any other system or process having need for electrical power generation.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims.

## Claims

1. An integrated auxiliary power unit generator constant speed drive system (2) comprising:
an auxiliary power unit (10) comprising an engine having a variable frequency rotational output (12) comprising a shaft turning at a non-constant angular velocity; and a gearbox (20) connected to the variable frequency rotational output (12) and having a constant speed gearbox output (24) comprising a shaft configured to turn at a constant angular velocity;
wherein the gearbox (20) transfers energy from the variable frequency rotational output (12) to the constant speed gearbox output (24), and wherein the gearbox (20) comprises:
a differential (23) connected to the variable frequency rotational output (12) of the auxiliary power unit (10); and
the constant speed gearbox output (24) is connected to the differential (23),
wherein the differential (23) is configured to rotate the constant speed gearbox output (24) at the constant angular velocity, and **characterised in that** the gearbox (20) further comprises a hydraulic output speed controller (25) in mechanical communication with the differential (23) whereby a speed of the constant speed gearbox output (24) may be controlled, and wherein the differential (23) further comprises a hydraulic output speed controller control shaft (51) whereby the differential (23) mechanically is coupled to the hydraulic output speed controller (25), and wherein the hydraulic output speed controller (25) comprises:
a speed sensor (27) proximate to the constant speed gearbox output (24), and configured to monitor the angular velocity of the constant speed gearbox output (24), and provide speed control instructions;
a servomotor (28) responsive to the speed control instructions; and
a swash plate (29) connected to the servomotor (28) and proximate to the hydraulic output controller control shaft (51), and **in that** the swash plate (29) engages the hydraulic output controller control shaft (51) and controls the angular velocity of the hydraulic output controller control shaft (51).

2. The system according to claim 1, wherein the speed sensor (27) comprises a permanent magnet generator.

3. The system according to claim 2, wherein the differential (23) controls the angular velocity of the constant speed gearbox output (24) in response to the angular velocity of the hydraulic output controller control shaft (51).

4. The system according to any preceding claim, further comprising a generator (30) connected to the constant speed gearbox output (24).

5. The system according to any preceding claim, wherein the engine is a gas turbine engine.

6. The system according to any preceding claim, wherein:
the gearbox (20) further comprises a starter rotational input (26); and
the system (2) further comprises a starter (40) coupled to the starter rotational input (26), wherein the starter rotational input (26) selectably engages the starter (40) to the variable frequency rotational output (12) of the auxiliary power unit (10).

7. The system according to claim 6 the starter (40) comprising an electric motor.

8. A method of controlling a speed of a constant speed gearbox (24), the method comprising:
rotating, by an engine of an auxiliary power unit (10) according to claim 1, a variable frequency rotational output (12), at a non-constant angular velocity;
driving, by the variable frequency rotational output (12), a differential (23);
rotating, by the differential (23), a constant speed gearbox output (24), and a hydraulic output controller control shaft (51);
sensing the angular velocity of the constant speed gearbox output (24) by a speed sensor (27);
providing speed control instructions by the speed sensor (27) to a servomotor (28) responsive to the speed control instructions; and
operating a swash plate (29) in response to the servomotor (28),
wherein the swash plate (29) controls the angular velocity of the hydraulic output controller control shaft (51); and
wherein the differential (23) controls the angular velocity of the constant speed gearbox output (24) to be a constant angular velocity in response to the swash plate (29) controlling the angular velocity of the hydraulic output controller control shaft (51).

9. The method according to claim 8, further comprising:
rotating the variable frequency rotational output (12) at the non-constant angular velocity, wherein the variable frequency rotational output (12) is connected to the engine of the auxiliary power unit (10).

10. The method according to claim 8 or 9, further comprising driving, by the constant speed gearbox output (24), a generator (30).

11. The method according to claim 10, further comprising producing by the generator (30) alternating current having a substantially constant frequency in response to the driving.

## Patentansprüche

1. Integriertes Konstantdrehzahlantriebssystem (2) eines Außenstromaggregatgenerators, umfassend:
ein Außenstromaggregat (10), umfassend einen Motor mit einem Drehausgang (12) variabler Frequenz, umfassend eine Welle, die sich mit einer nicht konstanten Winkelgeschwindigkeit dreht; und
ein Getriebe (20), das mit dem Drehausgang (12) variabler Frequenz verbunden ist und einen Konstantdrehzahlgetriebeausgang (24) aufweist, umfassend eine Welle, die zum Drehen bei einer konstanten Winkelgeschwindigkeit konfiguriert ist;
wobei das Getriebe (20) Energie von dem Drehausgang (12) variabler Frequenz an den Konstantdrehzahlgetriebeausgang (24) ausgibt und
wobei das Getriebe (20) Folgendes umfasst:
ein Ausgleichsgetriebe (23), das mit dem Drehausgang (12) variabler Frequenz des Außenstromaggregats (10) verbunden ist; und
der Konstantdrehzahlgetriebeausgang (24) mit dem Ausgleichsgetriebe (23) verbunden ist,
wobei das Ausgleichsgetriebe (23) zum Drehen des Getriebeausgangs (24) konstanter Drehzahl bei der konstanten Winkelgeschwindigkeit konfiguriert ist, und
**dadurch gekennzeichnet, dass**
das Getriebe (20) ferner eine Hydraulikausgangdrehzahlsteuerung (25) in mechanischer Verbindung mit dem Ausgleichsgetriebe (23) umfasst, wodurch eine Drehzahl des Getriebeausgangs (24) konstanter Drehzahl gesteuert werden kann, und wobei das Ausgleichsgetriebe (23) ferner eine Hydraulikausgangdrehzahlsteuerungssteuerwelle (51) umfasst, wodurch das Ausgleichsgetriebe (23) mechanisch an die Hydraulikausgangdrehzahlsteuerung (25) gekoppelt ist, und wobei die Hydraulikausgangdrehzahlsteuerung (25) Folgendes umfasst:
einen Drehzahlsensor (27) benachbart zu dem Konstantdrehzahlgetriebeausgang (24) und konfiguriert, um die Winkelgeschwindigkeit des Konstantdrehzahlgetriebeausgangs (24) zu überwachen und Drehzahlsteueranweisungen bereitzustellen,
einen Servomotor (28), der auf die Drehzahlsteueranweisungen anspricht; und
eine Taumelscheibe (29), die mit dem Servomotor (28) verbunden und zu der Hydraulikausgangdrehzahlsteuerungssteuerwelle (51) benachbart ist, und
dass
die Taumelscheibe (29) mit der Hydraulikausgangdrehzahlsteuerungssteuerwelle (51) in Eingriff steht und die Winkelgeschwindigkeit der Hydraulikausgangdrehzahlsteuerungssteuerwelle (51) steuert.

2. System nach Anspruch 1, wobei der Drehzahlsensor (27) einen Dauermagnetgenerator umfasst.

3. System nach Anspruch 2, wobei das Ausgleichsgetriebe (23) die Winkelgeschwindigkeit des Konstantdrehzahlgetriebeausgangs (24) in Reaktion auf die Winkelgeschwindigkeit der Hydraulikausgangdrehzahlsteuerungssteuerwelle (51) steuert.

4. System nach einem der vorangehenden Ansprüche, ferner umfassend einen Generator (30), der mit dem Konstantdrehzahlgetriebeausgang (24) verbunden ist.

5. System nach einem der vorangehenden Ansprüche, wobei der Motor ein Gasturbinenmotor ist.

6. System nach einem der vorangehenden Ansprüche, wobei:
das Getriebe (20) ferner einen Anlasserdreheingang (26) umfasst; und
das System (2) ferner einen Anlasser (40) umfasst, der an den Anlasserdreheingang (26) gekoppelt ist,
wobei der Anlasserdreheingang (26) auswählbar den Anlasser (40) mit dem Drehausgang (12) variabler Frequenz des Außenstromaggregats (10) in Eingriff bringt.

7. System nach Anspruch 6, wobei der Anlasser (40) einen Elektromotor umfasst.

8. Verfahren zum Steuern einer Drehzahl eines Konstantdrehzahlgetriebes (24), wobei das Verfahren Folgendes umfasst:
Drehen, durch einen Motor eines Außenstromaggregats (10) nach Anspruch 1, eines Drehausgangs (12) variabler Frequenz bei einer nicht konstanten Winkelgeschwindigkeit;
Antreiben eines Ausgleichsgetriebes (23) durch den Drehausgang (12) variabler Frequenz;
Drehen eines Konstantdrehzahlgetriebeausgangs (24) und einer Hydraulikausgangdrehzahlsteuerungssteuerwelle (51) durch das Ausgleichsgetriebe (23);
Messen der Winkelgeschwindigkeit des Konstantdrehzahlgetriebeausgangs (24) durch einen Drehzahlsensor (27);
Bereitstellen von Drehzahlsteueranweisungen durch den Drehzahlsensor (27) an einen Servomotor (28), der auf die Drehzahlsteueranweisungen anspricht; und
Betreiben einer Taumelscheibe (29) in Reaktion auf den Servomotor (28),
wobei die Taumelscheibe (29) die Winkelgeschwindigkeit der Hydraulikausgangdrehzahlsteuerungssteuerwelle (51) steuert; und
wobei das Ausgleichsgetriebe (23) in Reaktion darauf, dass die Taumelscheibe (29) die Winkelgeschwindigkeit der Hydraulikausgangdrehzahlsteuerungssteuerwelle (51) steuert, die Winkelgeschwindigkeit des Konstantdrehzahlgetriebeausgangs (24) als eine konstante Winkelgeschwindigkeit steuert.

9. Verfahren nach Anspruch 8, ferner umfassend:
Drehen des Drehausgangs (12) variabler Frequenz bei der nicht konstanten Winkelgeschwindigkeit, wobei der Drehausgang (12) variabler Frequenz mit dem Motor des Außenstromaggregats (10) verbunden ist.

10. Verfahren nach Anspruch 8 oder 9, ferner umfassend Antreiben eines Generators (30) durch den Konstantdrehzahlgetriebeausgang (24).

11. Verfahren nach Anspruch 10, ferner umfassend Erzeugen von Wechselstrom mit einer im Wesentlichen konstanten Frequenz durch den Generator (30) in Reaktion auf das Antreiben.

## Revendications

1. Système de commande à vitesse constante avec générateur à groupe auxiliaire de puissance intégré (2) comprenant :
un groupe auxiliaire de puissance (10) comprenant un moteur ayant une sortie de rotation à fréquence variable (12) comprenant un arbre tournant à une vitesse angulaire non constante ; et
un boîtier d'engrenages (20) relié à la sortie de rotation à fréquence variable (12) et ayant une sortie de boîtier d'engrenages à vitesse constante (24) comprenant un arbre configuré pour tourner à une vitesse angulaire constante ;
dans lequel le boîtier d'engrenages (20) transfère de l'énergie de la sortie de rotation à fréquence variable (12) à la sortie de boîtier d'engrenages à vitesse constante (24), et
dans lequel le boîtier d'engrenages (20) comprend :
un différentiel (23) relié à la sortie de rotation à fréquence variable (12) du groupe auxiliaire de puissance (10) ; et
la sortie du boîtier d'engrenages à vitesse constante (24) est reliée au différentiel (23),
dans lequel le différentiel (23) est configuré pour faire tourner la sortie du boîtier d'engrenages à vitesse constante (24) à la vitesse angulaire constante, et
**caractérisé en ce que**
le boîtier d'engrenages (20) comprend en outre un dispositif de commande de vitesse de sortie hydraulique (25) en communication mécanique avec le différentiel (23) moyennant quoi une vitesse de la sortie du boîtier d'engrenages à vitesse constante (24) peut être commandée, et dans lequel le différentiel (23) comprend en outre un arbre de commande de dispositif de commande de vitesse de sortie hydraulique (51) moyennant quoi le différentiel (23) est couplé mécaniquement au dispositif de commande de vitesse de sortie hydraulique (25), et dans lequel le dispositif de commande de vitesse de sortie hydraulique (25) comprend :
un capteur de vitesse (27) à proximité de la sortie du boîtier d'engrenages à vitesse constante (24), et configuré pour surveiller la vitesse angulaire de la sortie du boîtier d'engrenages à vitesse constante (24), et fournir des instructions de commande de vitesse ;
un servomoteur (28) répondant à des instructions de commande de vitesse ; et
un plateau oscillant (29) relié au servomoteur (28) et à proximité de l'arbre de commande de dispositif de commande de sortie hydraulique (51), et
**en ce que**
le plateau oscillant (29) entre en prise avec l'arbre de commande de dispositif de commande de sortie hydraulique (51) et commande la vitesse angulaire de l'arbre de commande de dispositif de commande de sortie hydraulique (51).

2. Système selon la revendication 1, dans lequel le capteur de vitesse (27) comprend un générateur à aimant permanent.

3. Système selon la revendication 2, dans lequel le différentiel (23) commande la vitesse angulaire de la sortie du boîtier d'engrenages à vitesse constante (24) en réponse à la vitesse angulaire de l'arbre de commande de dispositif de commande de sortie hydraulique (51).

4. Système selon une quelconque revendication précédente, comprenant en outre un générateur (30) relié à la sortie du boîtier d'engrenages à vitesse constante (24).

5. Système selon une quelconque revendication précédente, dans lequel le moteur est un moteur à turbine à gaz.

6. Système selon une quelconque revendication précédente, dans lequel :
le boîtier d'engrenages (20) comprend en outre une entrée de rotation de démarreur (26) ; et
le système (2) comprend en outre un démarreur (40) couplé à l'entrée de rotation de démarreur (26) dans lequel l'entrée de rotation de démarreur (26) vient en prise de manière sélective avec le démarreur (40) à la sortie de rotation à fréquence variable (12) du groupe auxiliaire de puissance (10).

7. Système selon la revendication 6 le démarreur (40) comprenant un moteur électrique.

8. Procédé de commande d'une vitesse d'un boîtier d'engrenages à vitesse constante (24), le procédé comprenant :
la rotation, par un moteur d'un groupe auxiliaire de puissance (10) selon la revendication 1, d'une sortie de rotation à fréquence variable (12), à une vitesse angulaire non constante ;
la commande, par la sortie de rotation à fréquence variable (12), d'un différentiel (23) ;
la rotation, par le différentiel (23), d'une sortie du boîtier d'engrenages à vitesse constante (24), et d'un arbre de commande de dispositif de commande de sortie hydraulique (51) ;
la détection de la vitesse angulaire de la sortie du boîtier d'engrenages à vitesse constante (24) par un capteur de vitesse (27) ;
la fourniture d'instructions de commande de vitesse par le capteur de vitesse (27) à un servomoteur (28) répondant aux instructions de commande de vitesse ; et
l'actionnement d'un plateau oscillant (29) en réponse au servomoteur (28),
dans lequel le plateau oscillant (29) commande la vitesse angulaire de l'arbre de commande de dispositif de commande de sortie hydraulique (51) ; et
dans lequel le différentiel (23) commande la vitesse angulaire de la sortie du boîtier d'engrenages à vitesse constante (24) pour être une vitesse angulaire constante en réponse au plateau oscillant (29) commandant la vitesse angulaire de l'arbre de commande de dispositif de commande de sortie hydraulique (51).

9. Procédé selon la revendication 8, comprenant en outre :
la rotation de la sortie de rotation à fréquence variable (12) à la vitesse angulaire non constante, dans lequel la sortie de rotation à fréquence variable (12) est reliée au moteur du groupe auxiliaire de puissance (10).

10. Procédé selon la revendication 8 ou 9, comprenant en outre la commande, par la sortie du boîtier d'engrenages à vitesse constante (24), d'un générateur (30).

11. Procédé selon la revendication 10, comprenant en outre la production par le générateur (30) d'un courant alternatif ayant une fréquence sensiblement constante en réponse à la commande.
